# EUROPÄISCHE PATENTSCHRIFT

(11) **EP 3 172 113 B1**
(45) Veröffentlichungstag und Bekanntmachung des Hinweises auf die Patenterteilung: **20.06.2018**
(21) Anmeldenummer: 15730809.9
(22) Anmeldetag: 24.06.2015
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 21.07.2014 DE 102014110204
(43) Veröffentlichungstag der Anmeldung: 31.05.2017
(73) Patentinhaber: ThyssenKrupp Presta AG, 9492 Eschen (LI); thyssenkrupp AG, 45143 Essen (DE)
(72) Erfinder: KURZ, Hannes, 6800 Feldkirch (AT); BIALEK, Markus, CH-9470 Buchs (CH); ADELMANN, Werner, CH-9469 Haag (CH); NICOLUSSI, Matthias, A-6800 Feldkirch (AT); HEHLE, Karl-Mathias, A-6912 Hörbranz (AT)
(74) Vertreter: thyssenkrupp Intellectual Property GmbH
(86) Internationale Anmeldenummer: PCT/EP2015/064191
(87) Internationale Veröffentlichungsnummer: WO 2016/012180

(56) Entgegenhaltungen:
- DE-B3-102011 000 319

## Beschreibung

### Technisches Gebiet

Die vorliegende Erfindung betrifft eine Lenksäule für ein Kraftfahrzeug, welche einen Führungskasten zur Aufnahme einer Lenkspindel und eine Konsole zum verstellbaren Halten des Führungskastens am Chassis des Kraftfahrzeugs aufweist, umfassend zumindest ein von einer Klemmachse durchdrungenes Druckstück zum Festlegen des Führungskastens bezüglich der Konsole, welches auf einer äußeren Seite einer Seitenwange der Konsole angeordnet ist.

### Stand der Technik

Um die Position des Lenkrads in Kraftfahrzeugen an die unterschiedlichen ergonomischen Anforderungen verschiedener Benutzer anzupassen, werden Lenksäulen verstellbar ausgebildet. In der Regel können verstellbare Lenksäulen in einer Höhenrichtung sowie einer Längsrichtung des Kraftfahrzeugs verstellt werden. Dabei kann zwischen einer verriegelten Stellung der Lenksäule für den Normalbetrieb des Kraftfahrzeugs und einer entriegelten Stellung zum Verstellen der Position der Lenksäule unterschieden werden. In der verriegelten Stellung ist die Lenksäule gegenüber dem Chassis des Kraftfahrzeugs fixiert. Die Fixierung der Lenksäule wird dabei derart gewählt, dass die Lenksäule auch den im Crashfall auftretenden hohen Belastungen standhält beziehungsweise ein kontrolliertes Abbauen von Crash-Energie ermöglicht. Gleichzeitig sollen derartige Fixierungen in der entriegelten Stellung ein leichtgängiges manuelles Verstellen der Lenksäule ermöglichen.

Die Verstellbarkeit der Lenksäulen wird in der Regel über eine veränderbare Positionierung eines Führungskastens, in welchem eine Lenkspindel aufgenommen ist, gegenüber einer Konsole zur Anbindung an das Chassis des Kraftfahrzeugs ermöglicht. Bei den bekannten Lösungen wird dabei zwischen einer kraftschlüssigen und einer formschlüssigen Verbindungen zwischen Führungskasten und Konsole unterschieden.

Eine formschlüssige Verbindung ist beispielsweise aus der DE 10 2011 000 319 B3 bekannt. Bei diesen formschlüssigen Verbindungen besteht das Problem, dass die Komponenten, welche den Formschluss eingehen, bei jeder Verriegelung der Lenksäule erneut auch plastisch verformt werden. Dadurch erfahren die Komponenten der Lenksäule, welche den Kontakt bereitstellen eine erhebliche mechanische Abnutzung.

Die Verriegelungssysteme, welche auf einer kraftschlüssigen Verbindung basieren, ermöglichen die Verriegelung der Lenksäule in der Regel über die elastische Verformung der Konsole. Eine auf Kraftschluss basierende Verriegelung ist beispielsweise aus der US 2008/0252056 A1 bekannt. Ein Nachteil dieser kraftschlüssigen Verbindungen ist, dass zur Bereitstellung des Kraftschlusses stets ein oder mehrere Teile der Konsole elastisch ausgeführt werden müssen. Das hat zur Folge, dass Eigenschaften der Konsole, wie deren Steifigkeit und deren Eigenfrequenz, von dem Erfordernis der Elastizität bestimmt sind. Gerade im Hinblick auf den Crashfall sind jedoch hohe Steifigkeiten der Konsole als Anbindungspunkt der Lenksäule an das Chassis gewünscht. Ferner bestehen vor dem Hintergrund von vom Motor sowie der Fahrbahn ausgehenden Schwingungen hohe Anforderungen an die Eigenfrequenz der Strukturbauteile der Lenksäule und es wird eine möglichst hohe Eigenfrequenz des schwingenden Systems gewünscht.

### Darstellung der Erfindung

Ausgehend von dem bekannten Stand der Technik ist es eine Aufgabe der vorliegenden Erfindung, eine verbesserte Lenksäule bereitzustellen, welche eine hohe Eigenfrequenz sowie eine hohe Steifigkeit aufweist.

Diese Aufgabe wird mittels einer Lenksäule mit den Merkmalen des Anspruchs 1 gelöst. Vorteilhafte Ausgestaltungen ergeben sich aus den Unteransprüchen.

Entsprechend wird eine Lenksäule für ein Kraftfahrzeug, welche einen Führungskasten zur Aufnahme einer Lenkspindel und eine Konsole zum verstellbaren Halten des Führungskastens am Chassis des Kraftfahrzeugs aufweist, umfassend zumindest ein von einer Klemmachse durchdrungenes Druckstück zum Festlegen des Führungskastens bezüglich der Konsole, welches auf einer äußeren Seite einer ersten Seitenwange der Konsole angeordnet ist, vorgeschlagen. Erfindungsgemäß weist das Druckstück zumindest einen Dom, welcher sich durch zumindest ein Langloch der ersten Seitenwange erstreckt, zur Erzeugung einer kraftschlüssigen Verbindung mit dem Führungskasten, auf.

Der zumindest eine Dom überträgt die in das Druckstück eingetragene Presskraft zur Fixierung des Führungskastens gegenüber der Konsole direkt oder indirekt auf den Führungskasten, indem dieser Dom auf den Führungskasten direkt oder indirekt gepresst wird. Durch dieses Anpressen des Doms auf den Führungskasten entsteht eine kraftschlüssige Verbindung aufgrund der vorherrschenden Reibung. Die Presskraft kann alternativ auch als Klemmkraft betitelt werden.

Durch den Dom des Druckstücks kann eine Klemmung des Führungskastens ohne eine Verformung der Seitenwangen der Konsole und ohne direkte Klemmung des Führungskastens zwischen den Seitenwangen der Konsole erzeugt werden. Da es für die Bereitstellung der Klemmung entsprechend nicht auf eine elastische Verformbarkeit der Seitenwangen der Konsole ankommt, können diese steif ausgelegt werden, so dass eine hohe Eigenfrequenz erreicht werden kann.

Dabei kann die Klemmung der Lenksäule dadurch erreicht werden, dass das Druckstück in einer verriegelten Stellung, in welcher die Lenksäule in Höhen- und in Längsrichtung gegenüber dem Chassis fixiert ist, eine kraftschlüssige Verbindung mit der äußeren Seite der ersten Seitenwange der Konsole eingeht und der Dom des Druckstücks gleichzeitig eine kraftschlüssige Verbindung mit dem Führungskasten eingeht. Dazu ist eine elastischere Ausgestaltung des Führungskastens im Vergleich zur Konsole vorteilhaft, damit beim Anliegen des Druckstücks auf der äußeren Seite der Seitenwange der Konsole eine Klemmwirkung zwischen zumindest einem Dom und dem Führungskasten ermöglicht wird. Folglich ist es nicht nötig, dass die Seitenwange, die mit dem Druckstück zusammenwirkt, an den Führungskasten angepresst wird.

Durch das zumindest eine Langloch in der ersten Seitenwange der Konsole, durch welches hindurch sich der zumindest eine Dom des Druckstücks erstreckt, kann dieser unabhängig von einer vertikalen Klemmposition relativ zu der ersten Seitenwange der Konsole mit dem Führungskasten in Kontakt treten. Dabei weist die Seitenwange der Konsole zumindest ein weiteres Langloch auf, durch welches die Klemmachse geführt ist, welche das Druckstück durchdringt oder mit dem Druckstück so zusammen wirkt, dass ein Kraftfluss zwischen Klemmachse und Druckstück ermöglicht ist. Die Langlöcher verlaufen vorzugweise parallel oder weisen den gleichen Radienmittelpunkt auf. Weiterhin ist es auch denkbar und möglich, dass die Langlöcher kombiniert sind. Mit anderen Worten weist die Konsole einen einzigen Ausbruch auf, durch den sich die Klemmachse und zumindest der eine Dom erstreckt. So kann entsprechend eine einfache und stufenlose Höhenverstellung des Führungskastens und damit des Lenkrades erreicht werden.

Das Druckstück liegt in der verriegelten Stellung auf einer äußeren Seite der Seitenwange der Konsole auf, so dass über das Druckstück eine sichere Verbindung zwischen Führungskasten und Konsole hergestellt wird.

Der zumindest eine Dom ist so angeordnet, dass dieser zur Klemmachse einen definierten Abstand aufweist, wobei die Klemmachse den Dom nicht durchdringt. Bei einer Anordnung von mindestens zwei Domen sind diese zueinander versetzt, bevorzugt symmetrisch zu einer durch die Klemmachse verlaufende Symmetrieebene, angeordnet.

Das Druckstück mit allen darauf angeordneten Domen ist bevorzugt als einziges integrales Bauteil ausgeführt, zum Beispiel als Sinterteil, Gussteil oder Schmiedeteil.

In einer bevorzugten Ausführungsform ist zwischen der Seitenwange der Konsole und dem Führungskasten ein Klemmblech zur Erzeugung einer kraftschlüssigen Verbindung zwischen dem zumindest einen Dom des Druckstücks und dem Führungskasten angeordnet. Durch das Klemmblech können entsprechend sowohl die Konsole als auch der Führungskasten mit einer hohen Eigenfrequenz und einer hohen Steifigkeit ausgelegt werden. Entsprechend kann sowohl auf eine Ausführung der Konsole und besonderes deren Seitenwangen verzichtet werden, die ein hohes Maß an elastischer Verformbarkeit aufweisen. Dies wird möglich, weil die für die Klemmkraft nötige Vorspannung zwischen Konsole und Führungskasten durch das Klemmblech bereitgestellt werden kann, welches im Vergleich zur Konsole und dem Führungskasten bevorzugt eine geringere Steifigkeit aufweist und besonders bevorzugt hoch elastisch ist. Das Klemmblech kann beispielsweise aus einem Federstahl gefertigt sein.

Dadurch, dass der Dom in der verriegelten Stellung unmittelbar auf das Klemmblech einwirkt, können der Führungskasten und die erste Seitenwange der Konsole geschont werden. So kommt es durch die von dem zumindest einen Dom ausgehende punktuelle Krafteinleitung in das Klemmblech bei wiederholter Verstellung der Lenksäule in erster Linie zu einer Abnutzung des Klemmblechs, welches durch eine entsprechende elastische Ausprägung die Abnutzung ausgleichen kann, so dass über die Lebensdauer der Lenksäule eine zuverlässige Verriegelung möglich ist.

Darüber hinaus wird das Spiel zwischen der Seitenwange der Konsole und dem Führungskasten in einer entriegelten Stellung, in welcher die Lenksäule verstellbar gegenüber dem Chassis gelagert ist, durch das Klemmblech reduziert. Auf diese Weise können ungewollte Bewegungen des Führungskastens um die Längsachse der Lenksäule in der entriegelten Stellung eingeschränkt beziehungsweise unterdrückt werden, so dass auch die Geräuscherzeugung reduziert wird.

Weiterhin wird das Spiel des Verriegelungshebels in der entriegelten Stellung reduziert, wodurch ebenfalls eine Geräuschreduktion und eine bessere Haptik erreicht wird.

Durch die elastischen Eigenschaften des Klemmblechs kann dieses auch als Mittel zum Zurückstellen des Druckstücks fungieren. Dabei bewirkt die Einnahme einer Ausgangsform des Klemmblechs in der entriegelten Stellung, dass das Klemmblech einen Druck auf den zumindest einen Dom des Druckstücks ausübt. Dadurch löst sich das Druckstück von der äußeren Oberfläche der ersten Seitenwange der Konsole, wodurch die Verstellbarkeit der Lenksäule begünstigt wird, wenn die Klemmung aufgehoben wird.

Die Kraft, mit welcher das Druckstück in der verriegelten Stellung das Klemmblech gegen den Führungskasten drückt, sowie die Kraft, mit welcher das Klemmblech in der entriegelten Stellung das Druckstück von der Seitenwange der Konsole löst, hängt dabei von den elastischen Eigenschaften des Klemmblechs ab.

In einer bevorzugten Ausgestaltung ist auch das Klemmblech von der Klemmachse durchdrungen, um eine Führung des Klemmblechs durch die Klemmachse zu ermöglichen. Da die Klemmachse neben dem Klemmblech auch durch das Druckstück verläuft beziehungsweise dieses durchdringt, kann sichergestellt werden, dass unabhängig von der Stellung der Lenksäule bezüglich der Seitenwange das Klemmblech dem Druckstück stets gegenüber liegt. In einer vorteilhaften Ausführung ist eine Verdrehsicherung zwischen der Klemmachse und dem Klemmblech, beispielsweise als Formschluss, vorgesehen. Dadurch können der zumindest eine Dom des Druckstücks und das Klemmblech in der verriegelten Stellung denselben Kontaktpunkt einnehmen. Dadurch, dass der Kontaktpunkt zwischen dem zumindest einen Dom und dem Klemmblech feststeht, kann die Anordnung des Doms auf dem Druckstück beziehungsweise die Dimensionierung des Klemmblechs unter der Berücksichtigung der Langlebigkeit der Komponenten sowie des Kraftflusses zwischen den Komponenten erfolgen.

Dadurch, dass das Klemmblech und das Druckstück stets gemeinsam von der Klemmachse relativ zum Führungskasten bewegt werden, ist es nicht erforderlich, dass das Klemmblech alle möglichen Kontaktbereiche zwischen dem Klemmblech und dem Führungskasten auf einmal abdeckt. Entsprechend kann sich die Dimensionierung des Klemmblechs an der Dimensionierung des Druckstücks und insbesondere an der Anzahl der am Druckstück bereitgestellten Dome orientieren.

Des Weiteren kommt der Klemmachse in Bezug auf das Klemmblech auch eine Haltefunktion zu.

In einer bevorzugten Weiterbildung weist das Klemmblech von einer Grundfläche hervorstehende Kontaktabschnitte, bevorzugt Erhöhungen, besonders bevorzugt Prägungen, ganz besonders bevorzugt Vorsprünge, zum Bilden eines Kontakts mit dem Führungskasten auf. Dadurch, dass das Klemmblech hervorstehende Kontaktabschnitte, Erhöhungen, Prägungen oder Vorsprünge aufweist, sind Kontaktbereiche zwischen dem Klemmblech und dem Führungskasten festgelegt. Da das Klemmblech von der Klemmachse geführt ist und diese relativ zu dem Führungskasten nur entlang der Längsachse der Lenksäule verstellt werden kann, ergeben sich linienförmige Kontaktbereiche zwischen den hervorstehenden Kontaktabschnitten, Erhöhungen, Prägungen oder Vorsprüngen des Klemmblechs und dem Führungskasten.

Darüber hinaus tragen die hervorstehenden Kontaktabschnitte, Erhöhungen, Prägungen oder Vorsprünge zur Klemmwirkung in der verriegelten Stellung der Lenksäule bei. Dabei können die Bereiche des Klemmblechs zwischen den hervorstehenden Kontaktabschnitten, Erhöhungen, Prägungen oder Vorsprüngen um einen Betrag, welcher kleiner oder gleich der Höhe der hervorstehenden Kontaktabschnitte, Erhöhungen, Prägungen, Vorsprünge gegenüber der Grundfläche des Klemmblechs ist, ausgelenkt werden.

Um den Betrag der Auslenkung, welche das Klemmblech in der verriegelten Stellung erfährt, kann der zumindest eine Dom in der entriegelten Stellung zurückgestellt werden, so dass sich das Druckstück zumindest um den Betrag der Auslenkung von der äußeren Seite der ersten Seitenwange der Konsole entfernt.

In einer weiter bevorzugten Ausführungsform ist ein Kontaktpunkt zumindest eines Doms im Bereich zwischen jeweils zwei der hervorstehenden Kontaktabschnitte des Klemmblechs angeordnet. Da der Bereich des Klemmblechs zwischen den hervorstehenden Kontaktabschnitten um die Höhe der hervorstehenden Kontaktabschnitte von dem Führungskasten beabstandet ist, kann durch zumindest einen Dom eine elastische Durchbiegung dieses Bereichs des Klemmblechs erfolgen. Die Durchbiegung des Bereichs zwischen den hervorstehenden Kontaktabschnitten ist dabei durch die Höhe der hervorstehenden Kontaktabschnitte begrenzt. Bevorzugt wird der Bereich zwischen den hervorstehenden Kontaktabschnitten durch den Dom um einen Betrag gebogen, welcher kleiner ist als die Höhe der hervorstehenden Kontaktabschnitte. Auf diese Weise ist gewährleistet, dass die kraftschlüssige Verbindung zwischen dem Druckstück und der äußeren Seite der ersten Seitenwange der Konsole bereitgestellt wird und nicht durch ein Aufsetzen der Grundfläche des Klemmblechs auf dem Führungskasten beeinträchtigt wird.

Durch die Durchbiegung des Klemmblechs im Bereich zwischen den hervorstehenden Kontaktabschnitten werden die hervorstehenden Kontaktabschnitte gegen den Führungskasten gedrückt beziehungsweise geklemmt.

In einer Weiterbildung weist ein Kontaktpunkt zumindest eines Doms einen äquidistanten Abstand zu mindestens zwei hervorstehenden Kontaktabschnitten des Klemmblechs auf.

Dadurch ergeben sich für den von dem Dom ausgehenden Kraftfluss gleichlange Wege durch das Klemmblech in den Führungskasten. Auf diese Weise ergibt sich in dem Klemmblech eine gleichmäßige Kraftverteilung, so dass die hervorstehenden Kontaktabschnitte gleichmäßig auf den Führungskasten gedrückt beziehungsweise geklemmt werden.

Dadurch, dass die hervorstehenden Kontaktabschnitte mit einer gleichmäßigen Klemmkraft auf den Führungskasten gedrückt werden, ergibt sich eine gleichmäßige Abnutzung der Kontaktbereiche auf dem Führungskasten, welche durch den Kontakt der hervorstehenden Kontaktabschnitte des Klemmblechs und dem Führungskasten beschrieben werden. Die von mindestens zwei hervorstehenden Kontaktabschnitten ausgehende gleichmäßige Klemmkraft hat auch den Vorteil, dass der Führungskasten in Bezug auf seine Festigkeit und Steifigkeit, insbesondere seine Wandstärke, homogen ausgelegt werden kann, da die von den mindestens zwei hervorstehenden Kontaktabschnitten ausgehende Belastung beziehungsweise Abnutzung stets gleich groß ist.

In einer weiter bevorzugten Ausgestaltung weist das Druckstück eine aufgeraute innere Oberfläche zur Erzeugung einer verbesserten kraftschlüssigen Verbindung mit der Konsole auf. Die aufgeraute innere Oberfläche des Druckstücks führt zu einer erhöhten Haftreibung zwischen dem Druckstück und der äußeren Seite der Seitenwange der Konsole in der verriegelten Stellung. Dadurch wird die kraftschlüssige Verbindung zwischen dem Druckstück und der Seitenwange der Konsole begünstigt. Unter einer aufgeraute Oberfläche werden mittlere Rautiefen R_{Z} grösser 3,2 µm, vorzugweise grösser oder gleich 6,3 µm verstanden.

In einer weiteren Ausgestaltung weist das Druckstück Eingriffselemente auf einer inneren Oberfläche zur Erzeugung einer formschlüssigen Verbindung mit der Konsole auf. Durch die Eingriffselemente, welche beispielsweise in Form von Noppen ausgebildet sein können, kann eine formschlüssige Verbindung zwischen dem Druckstück und der Seitenwange der Konsole erreicht werden, indem die Eingriffselemente in die Oberfläche der Seitenwange der Konsole eindringen. Dabei wird das Material an der Oberfläche der Seitenwange der Konsole durch die Eingriffselemente verdrängt. Somit kommt es bei jedem Klemmvorgang zu einer erneuten Verformung der Oberfläche der Seitenwange der Konsole durch die Eingriffselemente. Insgesamt ist im Vergleich zu einem Druckstück, welches keine Eingriffselemente aufweist, die Kraft, welche nötig ist, um die Klemmwirkung aufrechtzuerhalten, geringer.

In einer Weiterbildung ist in einer entriegelten Stellung zwischen dem Klemmblech und der Konsole und/oder dem Klemmblech und dem Führungskasten ein Spalt bereitgestellt. Dadurch wird ein Verstellen der Lenksäule ermöglicht, wobei der Führungskasten relativ zur Konsole verstellt wird. Insbesondere wird eine kraftschlüssige Verbindung zwischen dem Klemmblech und der Konsole und/oder dem Klemmblech und dem Führungskasten aufgrund des Spalts unterbunden.

In einer weiter bevorzugten Ausführungsform weist das Druckstück eine Führung auf, durch welche es von der Klemmachse geführt wird. Dadurch wird sichergestellt, dass das Druckstück den Bewegungen der Führungsachse bei der Verstellung der Lenksäule folgt. Die Führung hat zu Folge, dass genau festgelegt ist, wie das Druckstück relativ zum Führungskasten positioniert ist. Dadurch ergeben sich reproduzierbare Kontaktstellen zwischen dem zumindest einen Dom und dem Führungskasten beziehungsweise zwischen dem zumindest einen Dom und dem Klemmblech.

In einer bevorzugten Ausgestaltung weist das Klemmblech eine Führung auf, durch welche es von der Klemmachse geführt wird. Auf diese Weise folgt das Klemmblech der Klemmachse und insbesondere dem Druckstück. So kann sichergestellt werden, dass das der zumindest eine Dom des Druckstücks stets mit dem Klemmblech in Kontakt tritt.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Lenksäule,
- Figur 2: eine schematische perspektivische Ansicht der Lenksäule aus Figur 1,
- Figur 3: eine schematische Explosionsdarstellung der Lenksäule aus Figuren 1 und 2,
- Figur 4: eine schematische perspektivische Detailansicht eines Druckstücks und eines Klemmblechs an einem Führungskasten,
- Figur 5: eine schematische Explosionsdarstellung einer Lenksäule in einer weiteren Ausführungsform,
- Figur 6: eine schematische Schnittansicht durch eine Lenksäule,
- Figur 7: eine schematische Schnittansicht durch ein Detail der Lenksäule aus Figur 6 in einer Vorverriegelungsstellung,
- Figur 8: eine schematische Schnittansicht der Lenksäule aus Figur 6 in der entriegelten Stellung, und
- Figur 9: einen schematischen Ausschnitt einer Seitenansicht der Lenksäule aus Figur 1.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

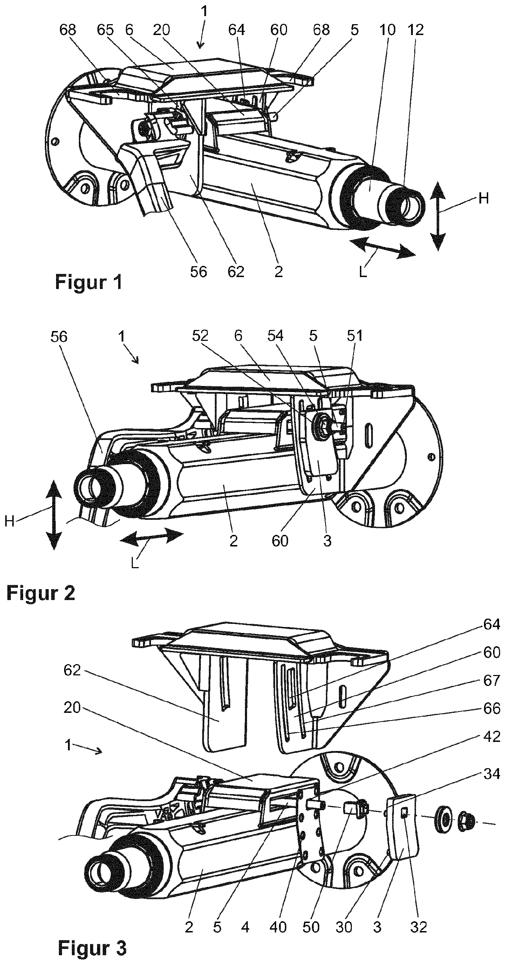

Figuren 1 und 2 zeigen schematisch eine perspektivische Ansicht einer Lenksäule 1. Die Lenksäule 1 weist eine Lenkspindel 10 auf, welche auf an sich bekannte Weise rotierbar in einem Führungskasten 2 gelagert ist. An einem Ende der Lenkspindel 10 ist ein Lenkradanschlussstück 12 angeordnet, welches zur Verbindung der Lenkspindel 10 mit einem hier nicht gezeigten Lenkrad dient.

Der Führungskasten 2 ist verstellbar mit einer Konsole 6 verbunden, welche auf an sich bekannte Weise mit dem Chassis des Kraftfahrzeugs verbunden ist. Dabei weist die Konsole 6 Befestigungslaschen 68 auf, welche zur Anbindung an das Chassis des Kraftfahrzeugs dienen.

Die Lenksäule 1 umfasst einen Verriegelungshebel 56, welcher zwischen einer entriegelten Stellung und einer verriegelten Stellung umgeschaltet werden kann. In der entriegelten Stellung des Verriegelungshebels 56 kann der Führungskasten 2 mitsamt der Lenkspindel 10 in einer Höhenrichtung H und einer Längsrichtung L relativ zur Konsole 6 verstellt werden. Der Verriegelungshebel 56 wirkt auf an sich bekannte Weise mittels einer Klemmachse 5 zwischen einer ersten Seitenwange 60 und einer zweiten Seitenwange 62 der Konsole 6. Dabei weist der Führungskasten 2 eine Klemmachsenführung 20 auf, durch welche hindurch die Klemmachse 5 geführt ist. Die Klemmachsenführung 20 lässt in der entriegelten Stellung eine relative Bewegung des Führungskastens 2 zur Klemmachse 5 in der Längsrichtung L zu. Somit wird die Verstellbarkeit der Lenksäule 1 in Längsrichtung L von dem Verstellweg, welcher von der Klemmachsenführung 20 für die Klemmachse 5 bereitgestellt ist, festgelegt.

Zur Verstellung der Lenksäule 1 in Höhenrichtung H wird der Führungskasten 2 gemeinsam mit der Klemmachse 5 relativ zur ersten Seitenwange 60 und zweiten Seitenwange 62 der Konsole 6 verschwenkt. Dazu sind in der ersten Seitenwange 60 und der zweiten Seitenwange 62 das erste Langloch 64 und das zweite Langloch 65 vorgesehen, mittels welchen die Klemmachse 5 zur vertikalen Verstellung der Lenksäule 1 geführt wird. Da der Führungskasten 2 zur Verstellung in Höhenrichtung H in der Regel um eine Schwenkachse schwenkbar angeordnet ist, weisen das erste Langloch 64 und das zweite Langloch 65 eine Krümmung auf, deren Radius in der Schwenkachse seinen Mittelpunkt findet.

In einer verriegelten Stellung des Verriegelungshebels 56 ist der Führungskasten 2 relativ zur Konsole 6 fixiert, so dass Bewegungen in Längsrichtung L und Höhenrichtung H unterbunden werden, sofern sich die Lenksäule 1 im Normalbetrieb befindet. Dabei geht von dem Verriegelungshebel 56 in der verriegelten Stellung eine Klemmwirkung aus, welche für die Fixierung der einzelnen Komponenten untereinander sorgt.

Figur 2 zeigt eine Schrägansicht der Lenksäule 1 aus Figur 1. Dabei ist auf einer äußeren Oberfläche der ersten Seitenwange 60 der Konsole 6 ein Druckstück 3 angeordnet, welches in der verriegelten Stellung der Lenksäule auf die äußere Oberfläche der ersten Seitenwange 60 gedrückt wird. Die Klemmkraft, mit welcher das Druckstück 3 auf die erste Seitenwange 60 gedrückt wird, geht dabei von einer Hubbewegung der Klemmachse 5 aus, welche bereitgestellt wird, wenn der Verriegelungshebel 56 von der entriegelten Stellung in die verriegelte Stellung geschaltet wird. Die Hubbewegung wird durch eine Mechanik auf der Seite der Klemmachse 5, auf welcher sich auch der Verriegelungshebel 56 befindet, erzeugt, beispielsweise über einen Exzenter. Auf der Klemmachse 5 sitzt ein Axiallager 52, welches mittels einer Sechskantmutter 54 gegen das Druckstück 3 verschraubt ist. Die Sechskantmutter 54 ist dabei auf ein Außengewinde am ersten Ende 51 der Klemmachse 5 aufgeschraubt.

Figur 3 zeigt eine Explosionsansicht der Figur 2. Es ist zu erkennen, dass die Klemmachse 5 aus der Klemmachsenführung 20 des Führungskastens 2 herausragt und ein Klemmblech 4 durchdringt, welches im verriegelten Zustand der Lenksäule 1 gegen den Führungskasten 2 geklemmt ist. Dazu wird das Klemmblech 2 von vier Domen 30, welche sich senkrecht von der inneren Oberfläche 34 des Druckstücks 3 erstrecken, kontaktiert und gegen den Führungskasten 2 gedrückt. Ein drittes Langloch 66 und ein viertes Langloch 67 in der ersten Seitenwange 60 der Konsole ermöglichen, dass sich die vier Dome 30 des Druckstücks 3 durch die erste Seitenwange 60 erstrecken, um das Klemmblech 4 in der verriegelten Stellung der Lenksäule 1 zu kontaktieren. Dabei erstrecken sich jeweils zwei Dome 30 durch das dritte Langloch 66 und das vierte Langloch 67.

Das dritte Langloch 66 und das vierte Langloch 67 weisen eine leichte Krümmung auf, deren Radius seinen Mittelpunkt in der Schwenkachse findet, um welche der Führungskasten 2 geschwenkt werden kann.

In einer nicht dargestellten Ausführungsform sind das erste, zweite, dritte und vierte Langloch parallel zueiander ausgerichtet, wobei die Schwenkachse einen entsprechenden Längenausgleich für die Höhenverstellung bereitstellt, beispielsweise in Form eines weiteren Langlochs.

Das Klemmblech 4 weist eine Führung 42 auf, durch welche die Klemmachse 5 geführt ist. Auch das Druckstück 3 weist eine Führung 32 auf, durch welche die Klemmachse 5 geführt werden kann. Um sicherzustellen, dass sich das Klemmblech 4 nicht relativ zum Druckstück 3 und insbesondere dessen Domen 30 verdreht, wird eine Lagerbuchse 50 mit Aufnahmen für die Führung 42 und die Führung 32 bereitgestellt. Die Lagerbuchse 50 sitzt entsprechend auf der Klemmachse 5 und durchdringt das erste Langloch 64 der ersten Seitenwange 60, wobei die Lagerbuchse drehsicher in dem Langloch 64 geführt ist. Dabei besitzt die Führung der Lagerbuchse 50 für das Klemmblech 4 die Negativform der Führung 42, wobei diese Negativform in die Klemmachsenführung 20 hineinragt und als Endanschlag in Längsrichtung L ausgebildet ist. -Die Führung der Lagerbuchse 50 für das Druckstück 3 weist die Negativform der Führung 32 auf. Zur Positionssicherung entlang der Längsachse der Klemmachse 5 weist die Lagerbuchse 50 einen Kragen auf, welcher sich im Langloch 64 befindet und gleichzeitig als Endanschlag in Höhenrichtung H ausgebildet ist.

Auf diese Weise wird sichergestellt, dass die vier Dome 30 des Druckstücks 3 das Klemmblech 4 in einer verriegelten Stellung der Lenksäule 1 kontaktieren und insbesondere dass stets die gleichen Kontaktpunkte auf dem Klemmblech 4 von den Domen 30 kontaktiert werden. Alternativ können das Klemmblech 4 und das Druckstück 3 auch als Rundkörper ausgebildet sein, welche um die Klemmachse 5 rotierbar angeordnet sind. In diesem Fall müssen das Klemmblech und der Dom nicht über eine Lagerbuchse relativ zueinander fixiert werden, da die scheibenförmigen Geometrien des Klemmblechs und des Druckstücks gewährleisten, dass die Dome des Druckstücks bei der Einnahme der verriegelten Stellung stets mit dem Klemmblech in Kontakt treten.

Das in Figur 3 gezeigte Klemmblech 4 weist eine nahezu rechteckige Form auf. Darüber hinaus umfasst das Klemmblech 4 acht im Randbereich gleichmäßig verteilte Erhöhungen 40, welche von einer Grundfläche des Klemmblechs 4 in Richtung des Führungskastens 2 hervorstehen. Die Erhöhungen 40 stellen die Kontaktabschnitte dar, welche im verriegelten Zustand der Lenksäule 1 auf den Führungskasten 2 geklemmt werden.

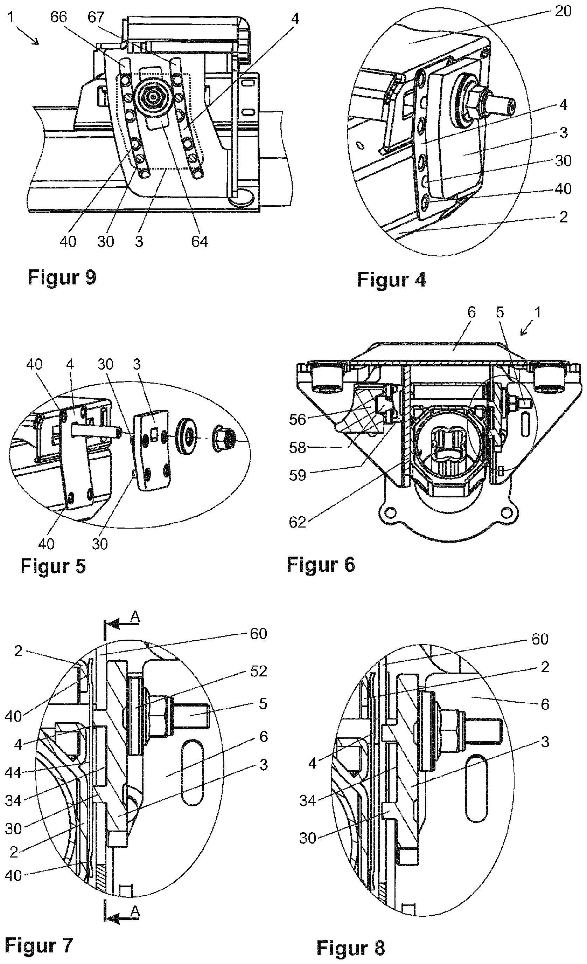

In der in Figur 4 gezeigten Detailansicht ist gezeigt, dass die Dome 30 das Klemmblech 4 in einem Bereich zwischen zwei Erhöhungen 40 kontaktieren. Dabei ist in Figur 4 die erste Seitenwange 60 zur besseren Veranschaulichung der Interaktion zwischen den Domen 30 des Druckstücks 3 und dem Klemmblech 4 nicht gezeigt.

Dadurch, dass das Klemmblech 4 von der Klemmachse 5 geführt wird, welche wiederum in der Klemmachsenführung 20 des Führungskastens 2 geführt wird, kann die Erzeugung von reproduzierbaren Kontaktstellen zwischen den Erhöhungen 40 des Klemmblechs 4 und dem Führungskasten 2 gewährleistet werden. In der in Figur 4 gezeigten Ausführungsform ergeben sich somit vier linienförmige Kontaktstellen auf dem Führungskasten 2, welche parallel zur Klemmachsenführung 20 verlaufen. Dabei wird jede der vier linienförmigen Kontaktstellen von jeweils zwei in einer Höhe angeordneten Erhöhungen 40 des Klemmblechs 4 kontaktiert. Entsprechend ist es ausreichend, wenn der Führungskasten 2 lediglich im Bereich der Kontaktstellen eine Beschaffenheit aufweist, um einen ausreichenden, bevorzugt gleichmäßigen Kontakt zu den Erhöhungen 40 des Klemmblechs 4 herzustellen.

In Figur 4 ist weiterhin gezeigt, dass ein Dom 30 in äquidistantem Abstand zu zwei angrenzenden Erhöhungen 40 des Klemmblechs 4 angeordnet ist. Dadurch wird in der verriegelten Stellung der Lenksäule 1 ein gleichmäßiger Kraftfluss von den Domen 30 über das Klemmblech 4 zu dem Führungskasten 2 bereitgestellt, so dass die einzelnen Erhöhungen 40 jeweils mit der gleichen Kraft gegen den Führungskasten 2 geklemmt werden.

Als Materialien für das Klemmblech 4 eignen sich Stähle mit einer hohen Elastizitätsgrenze wie beispielsweise Federstahl. Alternativ kann das Klemmblech 4 auch aus anderen Metallen oder Kunststoffen gebildet sein.

Das in Figur 3 gezeigte Klemmblech 4 weist acht Erhöhungen 40 auf. Alternativ kann das Klemmblech 4 auch eine andere Anzahl an Erhöhungen 40 aufweisen. Figur 5 zeigt beispielsweise schematisch eine Explosionsansicht eines Ausschnitts der Lenksäule 1, wobei nicht alle Komponenten abgebildet sind. Insbesondere sind die Konsole und die Lagerbuchse nicht dargestellt.

Das in Figur 5 gezeigte Klemmblech 4 weist vier Erhöhungen 40 auf, welche im Bereich der Ecken des Klemmblechs 4 angeordnet sind. Dabei kontaktieren vier Dome 30 des Druckstücks 3 das Klemmblech 4 in der verriegelten Stellung der Lenksäule 1 derart, dass in vertikaler Richtung zwischen zwei Erhöhungen 40 jeweils zwei Dome 30 mit dem Klemmblech 4 in Kontakt treten.

Alternativ kann das Klemmblech 4 auch einen, zwei, drei, fünf, sechs, sieben, neun, zehn oder mehr Erhöhungen aufweisen. Auch die Anzahl der Dome 30 kann alternativ eins, zwei, drei, fünf, sechs, sieben, acht, neun, zehn oder mehr betragen. Ferner können auch zwei, drei, vier oder mehr Klemmbleche zwischen einer Seitenwange der Konsole und dem Führungskasten angeordnet sein und somit den Lamellen-Effekt von mehreren Reibflächenpaaren nutzen.

Alternativ kann eine Lenksäule zwei Klemmbleche umfassen, wobei das erste Klemmblech zwischen der ersten Seitenwange der Konsole und dem Führungskasten und das zweite Klemmblech zwischen der zweiten Seitenwange der Konsole und dem Führungskasten angeordnet ist.

Figur 6 zeigt einen Querschnitt senkrecht zur Längsachse der Lenksäule 1. Dabei sind schematisch eine erste Nockenanordnung 58 und eine zweite Nockenanordnung 59 gezeigt, welche zur Erzeugung der Klemmbewegung, also der Hubbewegung der Klemmachse, zwischen der entriegelten Stellung und der verriegelten Stellung der Lenksäule 1 dienen. Dabei ist entweder die erste Nockenanordnung 58 oder die zweite Nockenanordnung 59 drehfest mit dem Verriegelungshebel 56 verbunden und die jeweils andere der beiden Nockenanordnungen 58, 59 drehfest mit der zweiten Seitenwange 62 der Konsole 6 verbunden. Durch Verdrehen der beiden Nockenanordnungen 58 und 59 gegeneinander um die Längsachse der Klemmachse 5 wird die Hubbewegung zwischen der entriegelten Stellung und der verriegelten Stellung der Lenksäule 1 und damit die Klemmung erzeugt.

Figur 7 zeigt eine Detailansicht des Querschnitts aus Figur 6, wobei sich die Lenksäule 1 in der verriegelten Stellung befindet. Ausgehend von der Klemmachse 5 wird über das Axiallager 52 gerade so viel Druck auf das Druckstück 3 ausgeübt, dass die Dome 30 des Druckstücks 3 das Klemmblech 4 kontaktieren. Die Erhöhungen 40 des Klemmblechs 4 liegen dabei an dem Führungskasten 2 an. Die innere Oberfläche 34 des Druckstücks 3 steht mit der ersten Seitenwange 60 der Konsole 6 in Kontakt, so dass eine kraftschlüssige Verbindung zwischen dem Druckstück 3 und der Seitenwange 60 durch die Klemmung der Lenksäule bereitgestellt ist.

Die Erhöhungen 40 des Klemmblechs 4 sind idealerweise so gewählt, dass die dem Führungskasten 2 zugewandte Grundfläche 44 des Klemmblechs 4 in der verriegelten Stellung der Lenksäule 1 den Führungskasten 2 gerade nicht kontaktiert. Dadurch erfolgt die Kontaktierung des Klemmblechs 4 mit dem Führungskasten 2 lediglich über die Erhöhungen 40, wodurch sich festgelegte und reproduzierbare Kontaktstellen zwischen dem Klemmblech 4 und dem Führungskasten 2 ergeben.

Alternativ kann der Führungskasten 2 sowohl von den Erhöhungen 40 als auch von der dem Führungskasten 2 zugewandten Grundfläche 44 des Klemmblechs 4 kontaktiert werden.

Das Druckstück 3 weist zur Erzeugung einer kraftschlüssigen Verbindung mit der Außenseite der ersten Seitenwange 60 bevorzugt eine aufgeraute innere Oberfläche 34 auf, welche mit der der Außenseite der Seitenwange 60 in Kontakt tritt. In einer Alternative oder Ergänzung kann die innere Oberfläche 34 des Druckstücks 3 auch mit Eingriffselementen versehen sein, die dann in entsprechende Eingriffselemente an der Außenseite der ersten Seitenwange 60 eingreifen oder sich in das Material der ersten Seitenwange 60 eindrücken, um eine formschlüssige Verbindung bereit zu stellen.

Figur 8 zeigt eine Detailansicht aus Figur 6, wobei sich die Lenksäule in der entriegelten Stellung befindet. Dabei befinden sich weder die Dome 30 in Kontakt mit dem Klemmblech 4, noch besteht Kontakt zwischen der inneren Oberfläche 34 des Druckstücks 3 und der ersten Seitenwange 60. Zwischen dem Führungskasten 2 und der Seitenwange 60 ist ein Spalt bereitgestellt, welcher erlaubt, dass das Klemmblech 4 in der entriegelten Stellung der Lenksäule ausreichend Spiel aufweist, um den Führungskasten 2 relativ zur Seitenwange 60 zu verstellen. Der Spalt zwischen dem Führungskasten 2 und der ersten Seitenwange 60 ist dabei so gewählt, dass er trotz einer Verstellbarkeit der Lenksäule ein ungewolltes Verkippen des Führungskastens 2 relativ zur Konsole 6 verhindert.

Alternativ kann das Klemmblech durch das Druckstück gering vorgespannt sein, um ein ungewolltes Verkippen des Führungskastens relativ zur Konsole zu verhindern.

Figur 9 zeigt einen Ausschnitt einer Seitenansicht der Lenksäule 1, wobei das Druckstück 3 nur durch eine gepunktete Linie angedeutet ist. Dabei ist ein Klemmblech 4 mit acht Erhöhungen 40 gezeigt. Die vier Dome 30 des Druckstücks 3 sind dabei derart angeordnet, dass sie das Klemmblech 4 im Bereich zwischen zwei Erhöhungen 40 kontaktieren. Der Figur 9 ist ferner die leichte Krümmung des ersten Langlochs 64, des dritten Langlochs 66 und des vierten Langlochs 67 zu entnehmen, welche aus der schwenkbaren Anordnung der Lenksäule 1 um eine nicht dargestellte Schwenkachse resultiert.

Soweit anwendbar, können alle einzelnen Merkmale, die in den einzelnen Ausführungsbeispielen dargestellt sind, miteinander kombiniert und/oder ausgetauscht werden, ohne den Bereich der Erfindung zu verlassen.

### Bezugszeichenliste

- 1: Lenksäule
- 10: Lenkspindel
- 12: Lenkradanschluss
- 2: Führungskasten
- 20: Klemmachsenführung
- 3: Druckstück
- 30: Dom
- 32: Führung
- 34: innere Oberfläche
- 36: äußere Oberfläche
- 4: Klemmblech
- 40: Erhöhung
- 42: Führung
- 44: Grundfläche
- 5: Klemmachse
- 50: Lagerbuchse
- 51: erstes Ende
- 52: Axiallager
- 54: Sechskantmutter
- 56: Verriegelungshebel
- 58: erste Nockenanordnung
- 59: zweite Nockenanordnung
- 6: Konsole
- 60: erste Seitenwange
- 62: zweite Seitenwange
- 64: erstes Langloch
- 65: zweites Langloch
- 66: drittes Langloch
- 67: viertes Langloch
- 68: Befestigungslasche
- H: Höhenrichtung
- L: Längsrichtung

## Patentansprüche

1. Lenksäule (1) für ein Kraftfahrzeug, welche einen Führungskasten (2) zur Aufnahme einer Lenkspindel (10) und eine Konsole (6) zum verstellbaren Halten des Führungskastens (2) am Chassis des Kraftfahrzeugs aufweist, umfassend zumindest ein von einer Klemmachse (5) durchdrungenes Druckstück (3) zum Festlegen des Führungskastens (2) bezüglich der Konsole (6), welches auf einer äußeren Seite einer ersten Seitenwange (60) der Konsole (6) angeordnet ist,
**dadurch gekennzeichnet, dass**
das Druckstück (3) zumindest einen Dom (30), welcher sich durch zumindest ein Langloch (64, 65) der ersten Seitenwange (60) erstreckt, zur Erzeugung einer kraftschlüssigen Verbindung mit dem Führungskasten (2) aufweist.

2. Lenksäule (1) gemäß Anspruch 1, **dadurch gekennzeichnet, dass** zwischen der ersten Seitenwange (60) der Konsole (6) und dem Führungskasten (2) ein Klemmblech (4) zur Erzeugung einer kraftschlüssigen Verbindung zwischen dem zumindest einen Dom (30) des Druckstücks (3) und dem Führungskasten (2) angeordnet ist.

3. Lenksäule (1) gemäß Anspruch 2, **dadurch gekennzeichnet, dass** das Klemmblech (4) elastisch ist und durch zumindest einen Dom (30) elastisch verformbar ist.

4. Lenksäule (1) gemäß Anspruch 2 oder 3, **dadurch gekennzeichnet, dass** das Klemmblech (4) von der Klemmachse (5) durchdrungen ist.

5. Lenksäule (1) gemäß einem der Ansprüche 2 bis 4, **dadurch gekennzeichnet, dass** das Klemmblech (4) von einer Grundfläche hervorstehende Kontaktabschnitte, bevorzugt Erhöhungen (40), besonders bevorzugt Prägungen, ganz besonders bevorzugt Vorsprünge, zum Bilden eines Kontakts mit dem Führungskasten (2) aufweist.

6. Lenksäule (1) gemäß Anspruch 5, **dadurch gekennzeichnet, dass** ein Kontaktpunkt zumindest eines Doms (30) im Bereich zwischen den hervorstehenden Kontaktabschnitten des Klemmblechs (4) angeordnet ist.

7. Lenksäule (1) gemäß Anspruch 5 oder 6, **dadurch gekennzeichnet, dass** ein Kontaktpunkt zumindest eines Doms (30) einen äquidistanten Abstand zu mindestens zwei hervorstehenden Kontaktabschnitten des Klemmblechs (4) aufweist.

8. Lenksäule (1) gemäß einem der vorhergehenden Ansprüche, **dadurch gekennzeichnet, dass** das Druckstück (3) eine aufgeraute innere Oberfläche (34) zur Erzeugung einer kraftschlüssigen Verbindung mit der äußeren Seite der ersten Seitenwange (60) aufweist.

9. Lenksäule (1) gemäß einem der vorhergehenden Ansprüche, **dadurch gekennzeichnet, dass** das Druckstück (3) Eingriffselemente auf einer inneren Oberfläche (34) aufweist zur Erzeugung einer formschlüssigen Verbindung mit der äußeren Seite der ersten Seitenwange (60).

10. Lenksäule (1) gemäß einem der Ansprüche 2 bis 8, **dadurch gekennzeichnet, dass** in einer entriegelten Stellung zwischen dem Klemmblech (4) und der Konsole (6) und/oder dem Klemmblech (4) und dem Führungskasten (2) ein Spalt bereitgestellt ist.

## Claims

1. Steering column (1) for a motor vehicle, which steering column comprises a guide box (2) for accommodating a steering spindle (10) and comprises a bracket (6) for holding the guide box (2) in adjustable fashion on the chassis of the motor vehicle, comprising at least one thrust piece (3) which is extended through by a clamping shaft (5) and which serves for fixing the guide box (2) relative to the bracket (6), which at least one thrust piece is arranged on an outer side of a first side web (60) of the bracket (6),
**characterized in that**
the thrust piece (3) comprises at least one dome (30) which extends through at least one slot (64, 65) of the first side web (60) and which serves for generating a force-fitting connection to the guide box (2).

2. Steering column (1) according to Claim 1, **characterized in that,** between the first side web (60) of the bracket (6) and the guide box (2), there is arranged a clamping plate (4) for generating a force-fitting connection between the at least one dome (30) of the thrust piece (3) and the guide box (2).

3. Steering column (1) according to Claim 2, **characterized in that** the clamping plate (4) is elastic and is elastically deformable by way of at least one dome (30).

4. Steering column (1) according to Claim 2 or 3, **characterized in that** the clamping plate (4) is extended through by the clamping shaft (5).

5. Steering column (1) according to one of Claims 2 to 4, **characterized in that** the clamping plate (4) comprises contact sections, preferably elevations (40), particularly preferably embossments, very particularly preferably projections, which protrude from a base surface and which serve for generating contact with the guide box (2).

6. Steering column (1) according to Claim 5, **characterized in that** a contact point of at least one dome (30) is arranged in the region between the protruding contact sections of the clamping plate (4).

7. Steering column (1) according to Claim 5 or 6, **characterized in that** a contact point of at least one dome (30) has an equidistant spacing to at least two protruding contact sections of the clamping plate (4).

8. Steering column (1) according to one of the preceding claims, **characterized in that** the thrust piece (3) comprises a roughened inner surface (34) for the purposes of generating a force-fitting connection to the outer side of the first side web (60) .

9. Steering column (1) according to one of the preceding claims, **characterized in that** the thrust piece (3) comprises engagement elements on an inner surface (34) for the purposes of generating a form-fitting connection to the outer side of the first side web (60).

10. Steering column (1) according to one of Claims 2 to 8, **characterized in that,** in an unlocked setting, a gap is provided between the clamping plate (4) and the bracket (6) and/or between the clamping plate (4) and the guide box (2).

## Revendications

1. Colonne de direction (1) pour un véhicule automobile, laquelle présente une boîte de guidage (2) pour recevoir un arbre de direction (10), et une console (6) pour retenir de manière déplaçable la boîte de guidage (2) sur le châssis du véhicule automobile, comprenant au moins une pièce de pression (3) traversée par un axe de serrage (5), pour fixer la boîte de guidage (2) par rapport à la console (6), laquelle pièce de pression est disposée sur un côté extérieur d'une première joue latérale (60) de la console (6),
**caractérisée en ce que**
la pièce de pression (3) présente au moins un dôme (30) qui s'étend à travers au moins un trou oblong (64, 65) de la première joue latérale (60), pour produire une liaison par engagement par force avec la boîte de guidage (2).

2. Colonne de direction (1) selon la revendication 1, **caractérisée en ce qu'**entre la première joue latérale (60) de la console (6) et la boîte de guidage (2) est disposée une tôle de serrage (4) pour générer une connexion par engagement par force entre l'au moins un dôme (30) de la pièce de pression (3) et la boîte de guidage (2).

3. Colonne de direction (1) selon la revendication 2, **caractérisée en ce que** la tôle de serrage (4) est élastique et peut être déformée élastiquement par au moins un dôme (30).

4. Colonne de direction (1) selon la revendication 2 ou 3, **caractérisée en ce que** la tôle de serrage (4) est traversée par l'axe de serrage (5).

5. Colonne de direction (1) selon l'une quelconque des revendications 2 à 4, **caractérisée en ce que** la tôle de serrage (4) présente des portions de contact faisant saillie depuis une surface de base, de préférence des rehaussements (40), particulièrement préférablement des gaufrages, tout particulièrement préférablement des saillies, pour former un contact avec la boîte de guidage (2) .

6. Colonne de direction (1) selon la revendication 5, **caractérisée en ce qu'**un point de contact d'au moins un dôme (30) est disposé dans la région entre les portions de contact saillantes de la tôle de serrage (4).

7. Colonne de direction (1) selon la revendication 5 ou 6, **caractérisée en ce qu'**un point de contact d'au moins un dôme (30) présente une distance équidistante à au moins deux portions de contact saillantes de la tôle de serrage (4).

8. Colonne de direction (1) selon l'une quelconque des revendications précédentes, **caractérisée en ce que** la pièce de pression (3) présente une surface intérieure rendue rugueuse (34) pour générer une liaison par engagement par force avec le côté extérieur de la première joue latérale (60).

9. Colonne de direction (1) selon l'une quelconque des revendications précédentes, **caractérisée en ce que** la pièce de pression (3) présente des éléments d'engagement sur une surface intérieure (34) pour générer une liaison par engagement par correspondance de formes avec le côté extérieur de la première joue latérale (60).

10. Colonne de direction (1) selon l'une quelconque des revendications 2 à 8, **caractérisée en ce que** dans une position déverrouillée entre la tôle de serrage (4) et la console (6) et/ou la tôle de serrage (4) et la boîte de guidage (2) est réalisée une fente.
